# EUROPÄISCHE PATENTSCHRIFT

(11) **EP 1 243 454 B1**
(45) Veröffentlichungstag und Bekanntmachung des Hinweises auf die Patenterteilung: **13.08.2003**
(21) Anmeldenummer: 02003686.9
(22) Anmeldetag: 19.02.2002
(51) Int. Cl.: B60J 7/14

(54) **Verstellbares Hardtop-Cabrioletfahrzeugdach aus zwei entlang der Fahrzeuglängsachse geteilten Dachteilen**
Movable hardtop for cabriolet divided along the longitudal vehicle axis into two roof panels
Toit rigide ouvrant pour un véhicule du type cabriolet, divisé le long de l'axe longitudinale en deux panneaux de toit

(30) Priorität: 19.03.2001 DE 10113428
(43) Veröffentlichungstag der Anmeldung: 25.09.2002
(73) Patentinhaber: CTS Fahrzeug-Dachsysteme GmbH, 21079 Hamburg (DE)
(72) Erfinder: Wezyk, Wojciech, 71065 Sindelfingen (DE); Halbweiss, Thomas, 71686 Remseck (DE)
(74) Vertreter: Müller, Gottfried

(56) Entgegenhaltungen:
- DE-C- 4 445 580
- DE-U- 29 601 330

## Beschreibung

Die Erfindung bezieht sich auf ein zwischen einer Schließposition und einer Cabrioletposition verstellbares Hardtop-Fahrzeugdach nach dem Oberbegriff des Anspruches 1. Ein solches Hardtopfahrzeugdach ist aus der Druckschrift DE 4 445 580 C1 bekannt.

Sie zeigt ein zweiteiliges Fahrzeugdach mit einem vorderen Dachteil und einem hinteren Dachteil, in welches eine Heckscheibe integriert ist. Über eine gemeinsame Stellkinematik sind das vordere und das hintere Dachteil zwischen einer den Fahrzeuginnenraum überdeckenden Schließstellung und einer Cabrioletstellung zu verstellen, in welcher die beiden Dachteile in einem hinter dem Fahrzeuginnenraum gelegenen Stauraum abgelegt sind. Vorderes und hinteres Dachteil sowie die Heckscheibe liegen im Stauraum übereinander. Da die beiden Dachteile sich jeweils im Wesentlichen über die gesamte Breite des Fahrzeuges erstrecken, muss auch der Stauraum entsprechend breit ausgebildet sein. Der Stauraum ist Bestandteil des Kofferraumes, so dass in Cabrioletstellung der nutzbare, frei zur Verfügung stehende Kofferraum sowohl in Querrichtung als auch in Längsrichtung erheblich reduziert ist.

Die DE 296 01 330 U1 beschreibt ein Hardtop-Fahrzeugdach, bei welchem die Dachteile in Cabrioletposition in einem hinter dem Fahrzeuginnenraum gelegenen Stauraum abzulegen sind. Das Fahrzeugdach umfasst zwei parallel angeordnete Dachteile in einer Dachöffnung, wobei die beiden Dachteile nicht über eine Dachkinematik mit der Fahrzeugkarosserie verbunden sind und relativ zur Fahrzeugkarosserie zu verstellen sind, sondern manuell in die Dachöffnung einzusetzen bzw. aus dieser herauszunehmen sind. Ein automatisiertes Öffnen und Schließen ist bei diesem Fahrzeugdach nicht möglich. Die Ablageposition der Dachteile ist nicht Gegenstand der DE 296 01 330 U1.

Hiervon ausgehend liegt der Erfindung das Problem zugrunde, ein Hardtop-Fahrzeugdach zu schaffen, das in Cabrioletstellung einen geringen Stauraum beansprucht.

Dieses Problem wird erfindungsgemäß mit den Merkmalen des Anspruches 1 gelöst. Die Unteransprüche enthalten zweckmäßige Weiterbildungen.

Das Fahrzeugdach ist längsgeteilt, wobei zumindest zwei Dachteile vorgesehen sind, welche sich in Schließposition des Fahrzeugdaches im Wesentlichen links und rechts einer Längs-Trennachse erstrecken, welche etwa parallel zur Fahrzeuglängsachse verläuft und somit mit der Fahrzeuglängsachse in einer gemeinsamen Ebene liegt. Auf Grund der Längsteilung des Fahrzeugdaches ist es insbesondere bei Fahrzeugen mit einem in Längsrichtung verhältnismäßig kurzen Fahrzeuginnenraum, also beispielsweise bei zweisitzigen Cabrioletfahrzeugen, möglich, die Länge der Dachteile gering zu halten, wodurch im Vergleich zu bisher bekannten Cabrioletfahrzeugen mit sich in Querrichtung erstreckenden Dachteilen eine geringere Absolutlänge der Dachteile erzielt werden kann und dementsprechend auch ein kleineres Staumaß in Cabrioletstellung benötigt wird. Da die Breite jedes Dachteiles bei Verwendung von insgesamt zwei Dachteilen üblicherweise etwa der halben Fahrzeugbreite entspricht, kann auf diese Weise der Stauraum verhältnismäßig klein gehalten werden.

Es wird hierdurch die Möglichkeit eröffnet, die Dachteile in Cabrioletposition in einer anderen Ausrichtung abzulegen als in Schließposition des Fahrzeugdaches. Die Dachteile werden in Cabrioletposition in Fahrzeuglängsrichtung hintereinander liegend im Stauraum abgelegt, wobei bei der Überführung von Schließ- in Cabrioletposition die Dachteile um etwa 90° um eine Hochachse nach innen verschwenkt werden können, um die hintereinander liegende Position einzunehmen, bei der vorteilhaft die beiden Dachteile unmittelbar ohne sonstige zwischenliegende Dachteile aufeinander folgend abgelegt sind. In Cabrioletposition liegen die Dachteile in diesem Fall quer zur Fahrzeuglängsachse, wobei in bevorzugter Weiterbildung die Dachteile eine aufgestellte Position einnehmen, in der die Dachteilebene näherungsweise vertikal ausgerichtet ist. Die aufgestellte Position kann durch eine zusätzliche Drehung um eine Querachse erzielt werden, wobei vorteilhaft eine Kombination beider Schwenkbewegungen um räumliche Schwenkachsen durchgeführt wird.

Bei einer Querablage der Dachteile ist insbesondere in Fahrzeuglängsrichtung nur ein geringes Staumaß im Stauraum erforderlich, so dass der Stauraum entsprechend schmal ausgebildet sein kann und dementsprechend auch nur eine schmale Öffnung aufweist, über die die Dachteile in den Stauraum eingeführt werden. Daraus ergibt sich der zusätzliche Vorteil, dass auf einen Zusatzantrieb des Heckdeckels zur Freigabe einer großen Stauraumöffnung verzichtet werden kann.

Zur Überführung in Cabrioletstellung können die Dachteile zusätzlich zur Verschwenkung auch nach hinten in Richtung Fahrzeugheck verstellt werden, insbesondere translatorisch verschoben werden.

Das Fahrzeugdach weist zweckmäßig eine Heckscheibe auf, welche in Schließposition des Daches von den Dachteilen zumindest teilweise umgriffen ist und lösbar in einer Ausnehmung in den Dachteilen aufgenommen ist. Diese Ausnehmung in den Dachteilen kann für eine besonders kompakte Ablageposition genutzt werden, indem in Cabrioletposition des Fahrzeugdaches Radkästen des Fahrzeugs, welche in den Stauraum einragen, von den Ausnehmungen übergriffen werden, wodurch das beschränkte Raumangebot zur Ablage des Fahrzeugdaches in optimaler Weise ausgenutzt wird.

Die Dachteile umgreifen die Heckscheibe vorteilhaft sowohl im Bereich von deren Seitenkante als auch im Bereich der Heckscheiben-Oberkante, wobei der die Seitenkante übergreifende Abschnitt jedes Dachteiles vorteilhaft zugleich die C-Säule im Fahrzeugdach bildet.

Die Heckscheibe weist bevorzugt eine eigene Heckscheibenkinematik auf, die unabhängig von den Dachteilen bzw. der Stellkinematik der Dachteile ausgeführt und über die die Heckscheibe unmittelbar an die Fahrzeugkarosserie angekoppelt ist. Vorteilhaft ermöglicht die Heckscheibenkinematik ein Absenken in den Stauraum, um bei der Überführung des Fahrzeugdaches zwischen Schließ- und Cabrioletposition eine Kollision mit den Dachteilen zu vermeiden. Die unabhängige Ausführung der Heckscheibenkinematik ermöglicht, die Heckscheibe in Cabrioletposition des Fahrzeugdaches als Windschott einzusetzen, in welcher die Heckscheibe in einer über die Fahrzeug-Karosserielinie herausragenden Position unmittelbar hinter den Fahrzeugsitzen aufgestellt ist. Die Heckscheibe übernimmt eine Doppelfunktion als Scheibe in Schließposition des Fahrzeuges und als Windschott in Cabrioletposition. Ein zusätzliches Bauteil, welches eine Windschottfunktion übernimmt, kann entfallen.

Weitere Vorteile und zweckmäßige Ausführungen sind den weiteren Ansprüchen, der Figurenbeschreibung und den Zeichnungen zu entnehmen. Es zeigen:
- Fig. 1: ein Cabriolet-Fahrzeug mit einem längsgeteilten Hardtop-Fahrzeugdach, dargestellt in Schließposition, jedoch mit abgesenkter Heckscheibe,
- Fig. 2: das Fahrzeugdach in einer Zwischenstellung zwischen Schließ- und Cabrioletposition,
- Fig. 3: das Fahrzeugdach in Cabrioletposition mit aufgestellter, die Funktion eines Windschotts übernehmender Heckscheibe,
- Fig. 4: einen Schnitt durch den Stauraum des Fahrzeuges in Cabrioletposition mit abgelegtem Hardtop-Fahrzeugdach und aufgestellter Heckscheibe.

In den folgenden Figuren sind gleiche Bauteile mit gleichen Bezugszeichen versehen.

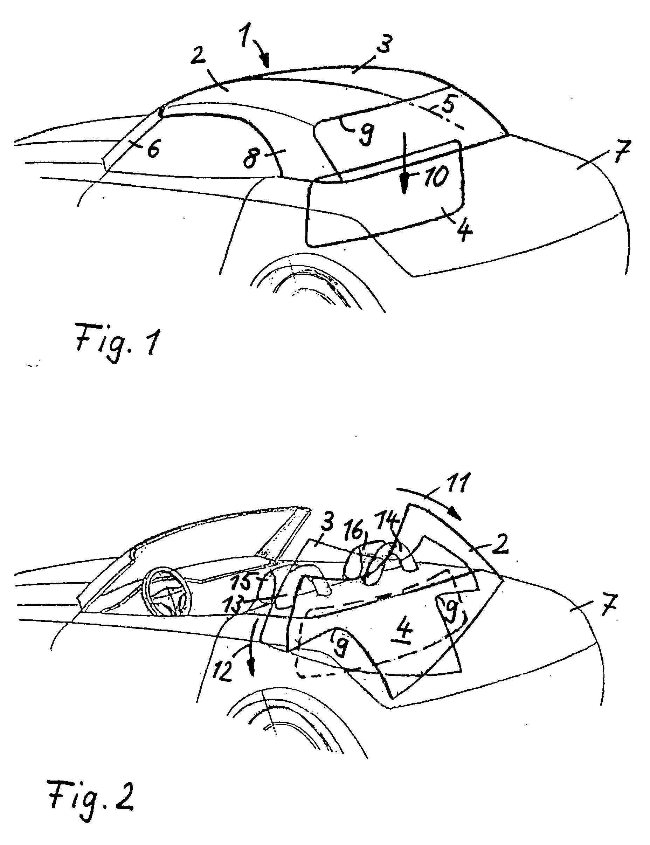

Das in Fig. 1 in Schließposition dargestellte Hardtop-Fahrzeugdach ist längsgeteilt und besteht aus zwei in sich starren Dachteilen 2 und 3, die in Schließposition sich beidseitig einer Längs-Trennachse 5 erstrecken, welche etwa parallel zur Fahrzeuglängsachse verläuft und mit dieser eine gemeinsame Ebene einschließt. Die Trennlinie bzw. Trennachse 5 liegt vorteilhaft in der Längs-Mittelebene des Fahrzeugs, die Dachteile 2 und 3 sind spiegelsymmetrisch zur Längs-Trennachse 5 ausgebildet. Im Bereich der Trennachse 5 sind die Dachteile 2 und 3 in Querrichtung wind- und wasserdicht aneinander gefügt, wobei eine die beiden Dachteile 2 und 3 in Querrichtung zusammenhaltende Klammer oder ein ähnliches Bauteil vorgesehen sein kann, um die Dichtwirkung zu verbessern. Jedes der Dachteile 2 und 3 erstreckt sich in Fahrzeuglängsrichtung im Wesentlichen über den gesamten Fahrzeuginnenraum zwischen Windschutzscheibenrahmen 6 und einem Heckdeckel 7, welcher einen darunter liegenden Kofferraum überdeckt. Jedes Dachteil 2 bzw. 3 ist insbesondere einteilig ausgeführt und umfasst einen seitlichen, hinteren Abschnitt, welcher in Schließposition eine C-Säule 8 bildet.

Das Hardtop-Fahrzeugdach 1 umfasst eine Heckscheibe 4, die in Schließposition in einer Ausnehmung 9 im rückwärtigen Bereich der Dachteile 2 und 3 aufgenommen ist. Die beiden Ausnehmungen 9 in jedem Dachteil 2 bzw. 3 ergänzen sich zu einer Gesamtfläche, welche genau der Fläche der Heckscheibe 4 entspricht. In Schließstellung grenzt die Heckscheibe 4 mit jeweils einer Seitenkante an die C-Säule 8 jedes Dachteils 2 bzw. 3 und mit der Oberkante an den quer verlaufenden, die Ausnehmung 9 nach oben begrenzenden Abschnitt der Dachteile 2 und 3.

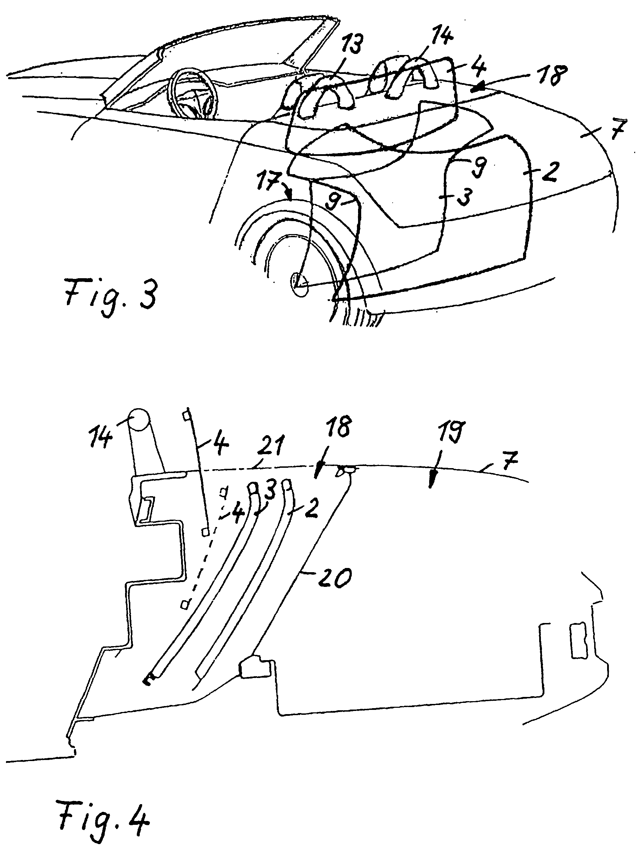

Die Heckscheibe 4 kann aus der Ausnehmung 9 in den Dachteilen 2 bzw. 3 gelöst werden und in Pfeilrichtung 10 nach unten in einen dargestellten Stauraum 18 (siehe Fig. 3 und 4) abgesenkt werden, um insbesondere Raum für die Überführung der Dachteile 2 und 3 aus der Schließposition in Cabrioletposition bzw. umgekehrt zu schaffen. Die Heckscheibe 4 weist hierfür eine eigene Heckscheibenkinematik auf, über die die Heckscheibe 4 an die Fahrzeugkarosserie angekoppelt ist und die eine Heckscheibenbewegung unabhängig von den Dachteilen 2 und 3 bzw. der die Dachteile 2 und 3 beaufschlagenden Stellkinematik erlaubt. Die Überführung der Heckscheibe 4 zwischen der Schließposition, in welcher die Heckscheibe 4 in der Ausnehmung 9 in den Dachteilen 2 und 3 aufgenommen ist und der abgesenkten Position im Stauraum erfolgt zweckmäßig ohne Öffnung des Heckdeckels 7.

Fig. 2 zeigt eine Zwischenstellung des Fahrzeugdaches bei der Überführung von Schließ- in Cabrioletposition. Die beiden Dachteile 2 und 3 werden mittels der ihnen zugeordneten Stellkinematik nach hinten in Richtung Stauraum verstellt. Hierbei werden die Dachteile 2 und 3 um eine räumliche Achse verschwenkt, welche aus zwei Einzelrotationen zum einen um eine Querachse quer zur Fahrzeuglängsachse und zum anderen um eine Hochachse zusammengesetzt werden kann und beide Einzeldrehungen etwa 90° betragen. Die aus den Einzeldrehungen zusammengesetzte räumliche Schwenkbewegung der Dachteile 2 und 3 ist in Fig. 2 mit Pfeilrichtung 11 bzw. 12 gekennzeichnet. Diese räumliche Schwenkbewegung hat zur Folge, dass die Dachteile 2 und 3 im Stauraum in Querrichtung aufrecht stehend abgelegt werden und unmittelbar hintereinander liegen. Während der Überführungsbewegung der Dachteile 2 und 3 in die Ablage- bzw. Cabrioletposition verharrt die Heckscheibe 4 in ihrer abgesenkten Lage im Stauraum, wobei die Dachteile 2 und 3 unmittelbar hinter der Heckscheibe abgelegt werden. Die Überführung der Dachteile 2 und 3 in den Stauraum kann bei geschlossenem Heckdeckel 7 erfolgen. Der Stauraum befindet sich unmittelbar hinter Überrollbügeln 13 bzw. 14, die jeweils Fahrersitzen 15 und 16 zugeordnet sind, und vor dem Kofferraum des Fahrzeugs.

In Fig. 3 ist das Fahrzeugdach in Cabrioletstellung dargestellt, in welcher die Dachteile 2 und 3 im Stauraum 18 abgelegt sind, welcher sich in einem Bereich zwischen dem Kofferraum, der vom Heckdeckel 7 verschlossen ist, und den Überrollbügeln 13 und 14 erstreckt. Die Heckscheibe 4 befindet sich in ihrer aufgestellten Position unmittelbar hinter den Überrollbügeln 13 und 14 und übernimmt die Funktion eines Windschotts. Die Dachteile 2 und 3 sind vollständig im Stauraum 18 abgelegt und befinden sich unterhalb der Karosserielinie. Auf Grund der in Fig. 2 beschriebenen räumlichen Schwenkbewegung der Dachteile bei der Überführung von Schließ- in Cabrioletposition befinden sich die Ausnehmungen 9 in jedem Dachteil 2 bzw. 3 unmittelbar im Bereich von Radkästen 17, welche in den Stauraum 18 einragen. Dadurch übergreifen die Dachteile 2 und 3 die Radkästen 17 links und rechts in platzsparender Weise.

Die Bewegung der Dachteile 2 und 3 bei der Überführung von Schließ- in Cabrioletposition erfolgt spiegelsymmetrisch zur Längs-Mittelebene des Fahrzeugs, so dass in der abgelegten Stellung im Stauraum 18 die Ausnehmung 9 jedes Dachteils 2 bzw. 3 jeweils den zugeordneten Radkasten 17 aufnimmt und das betreffende Dachteil diesen Radkasten übergreift.

Fig. 4 ist zu entnehmen, dass der Stauraum 18 über eine Blende 20 vom Kofferraum 19 abgeteilt ist, wobei die Blende 20 in Schließstellung des Fahrzeugdaches herausgenommen oder in Öffnungsstellung verschwenkt werden kann, um das nutzbare Kofferraumvolumen zu vergrößern. Der Stauraum 18 kann gegebenenfalls nach oben von einer Persenning 21 abgedeckt sein.

Die Heckscheibe 4 ist zwischen der strichliert dargestellten, in den Stauraum 18 abgesenkten Position und der mit durchgezogenem Strich gezeichneten, aufgestellten Position zu verstellen, in der die Heckscheibe eine Windschottfunktion übernimmt. Die Verstellung zwischen abgesenkter und aufgestellter Position erfolgt mit Hilfe einer eigenen Heckscheibenkinematik unabhängig von der Stellbewegung der Dachteile 2 und 3. In abgesenkter Position der Heckscheibe 4 schließen sich in Cabrioletposition zunächst das Dachteil 3 und schließlich das Dachteil 2 an.

In Cabrioletposition des Fahrzeugdaches kann die Heckscheibe 4 nach oben in Windschottstellung versetzt werden. Es kann gegebenenfalls aber auch zweckmäßig sein, die Heckscheibe in Cabrioletposition in ihrer abgesenkten Position im Stauraum 18 zu belassen.

Außerdem kann es zweckmäßig sein, mehr als zwei längsgeteilte Dachteile vorzusehen. Es kann auch vorteilhaft sein, dass sich jedes Dachteil in Fahrzeuglängsrichtung nur über eine Teillänge des Fahrzeugdaches erstreckt.

## Patentansprüche

1. Hardtop-Fahrzeugdach, mit zumindest zwei Dachteilen (2 und 3), die zwischen einer den Fahrzeuginnenraum überdeckenden Schließposition und einer Cabrioletposition verstellbar sind, in der die Dachteile (2 und 3) in einem hinter dem Fahrzeuginnenraum gelegenen Stauraum (18) ablegbar sind,
**dadurch gekennzeichnet,**
**dass** die Dachteile (2 und 3) in Schließposition entlang einer Längs-Trennachse (5) zweigeteilt sind, welche in einer Ebene mit der Fahrzeuglängsachse liegt, und mittels einer ihnen zugeordneten Stellkinematik in Cabrioletposition quer zur Fahrzeuglängsachse hintereinanderliegend im Stauraum (18) ablegbar sind.

2. Hardtop-Fahrzeugdach nach Anspruch 1,
**dadurch gekennzeichnet,**
**dass** in Schließposition sich jedes Dachteil (2 bzw. 3) in Fahrzeuglängsrichtung über den gesamten Fahrzeuginnenraum erstreckt.

3. Hardtop-Fahrzeugdach nach Anspruch 1 oder 2,
**dadurch gekennzeichnet,**
**dass** eine Heckscheibe (4) vorgesehen ist, die in Schließposition von den Dachteilen (2 und 3) umgriffen und lösbar in einer Ausnehmung (9) in den Dachteilen (2 und 3) aufgenommen ist.

4. Hardtop-Fahrzeugdach nach Anspruch 3,
**dadurch gekennzeichnet,**
**dass** jedes Dachteil (2 bzw. 3) die Heckscheibe (4) in Schließposition des Fahrzeugdaches (1) an deren Seitenkante und teilweise an deren Oberkante umgreift.

5. Hardtop-Fahrzeugdach nach Anspruch 4,
**dadurch gekennzeichnet,**
**dass** ein die Heckscheibe (4) an deren Seitenkante übergreifender Abschnitt im Dachteil (2 bzw. 3) eine C-Säule (8) bildet.

6. Hardtop-Fahrzeugdach nach einem der Ansprüche 3 bis 5,
**dadurch gekennzeichnet,**
**dass** die Dachteile (2 und 3) in Cabrioletposition in der Weise im Stauraum (18) abgelegt sind, dass die Heckscheiben-Ausnehmung (9) einen in den Stauraum (18) einragenden Radkasten (17) des Fahrzeugs übergreift.

7. Hardtop-Fahrzeugdach nach einem der Ansprüche 1 bis 6,
**dadurch gekennzeichnet,**
**dass** die Heckscheibe (4) eine eigene Heckscheibenkinematik aufweist, die unabhängig von den Dachteilen (2 und 3) bzw. einer Dachteil-Stellkinematik ausgebildet und unmittelbar an die Fahrzeugkarosserie angekoppelt ist.

8. Hardtop-Fahrzeugdach nach einem der Ansprüche 1 bis 7,
**dadurch gekennzeichnet,**
**dass** die Heckscheibe (4) in Cabrioletposition ein Windschott bildet.

9. Hardtop-Fahrzeugdach nach Anspruch 8,
**dadurch gekennzeichnet,**
**dass** die Heckscheibe (4) zur Überführung der Dachteile (2 und 3) zwischen Schließ- und Cabrioletposition in eine abgesenkte Lage verstellbar ist.

## Claims

1. Hardtop vehicle roof, having at least two roof parts (2 and 3) which can be adjusted between a closed position covering the vehicle interior and an open-top position in which the roof parts (2 and 3) can be placed in a storage space (18) situated behind the vehicle interior, **characterized in that**, in the closed position, the roof parts (2 and 3) are divided in two along a longitudinal axis of separation (5), which lies in a plane together with the longitudinal axis of the vehicle, and, in the open-top position, can be placed lying one behind the other transversely with respect to the longitudinal axis of the vehicle in the storage space (18) by means of an adjusting kinematics assigned to them.

2. Hardtop vehicle roof according to Claim 1, **characterized in that**, in the closed position, each roof part (2 or 3) extends over the entire vehicle interior in the longitudinal direction of the vehicle.

3. Hardtop vehicle roof according to Claim 1 or 2, **characterized in that** a rear window (4) is provided which, in the closed position, is engaged around by the roof parts (2 and 3) and is held releasably in a recess (9) in the roof parts (2 and 3).

4. Hardtop vehicle roof according to Claim 3, **characterized in that**, in the closed position of the vehicle roof (1), each roof part (2 or 3) engages around the rear window (4) on its side edge and on part of its upper edge.

5. Hardtop vehicle roof according to Claim 4, **characterized in that** a section in the roof part (2 or 3), which section engages over the rear window (4) on its side edge, forms a C pillar (8).

6. Hardtop vehicle roof according to one of Claims 3 to 5, **characterized in that**, in the open-top position, the roof parts (2 and 3) are placed in the storage space (18) in such a manner that the rear-window recess (9) engages over a wheel arch (17) of the vehicle, which arch protrudes into the storage space (18).

7. Hardtop vehicle roof according to one of Claims 1 to 6, **characterized in that** the rear window (4) has its own rear-window kinematics which is formed independently of the roof parts (2 and 3) and of a roof-part adjusting kinematics and is coupled directly onto the vehicle body.

8. Hardtop vehicle roof according to one of Claims 1 to 7, **characterized in that**, in the open-top position, the rear window (4) forms a windbreak.

9. Hardtop vehicle roof according to Claim 8, **characterized in that** the rear window (4) can be adjusted into a lowered position in order to transfer the roof parts (2 and 3) between the closed position and open-top position.

## Revendications

1. Toit de véhicule amovible rigide, ayant au moins deux pièces de toit (2 et 3), qui sont ajustables entre une position de fermeture recouvrant l'espace intérieur du véhicule et une position cabriolet, dans laquelle les pièces de toit (2 et 3) peuvent être rangées dans un espace de rangement (18) situé derrière l'espace intérieur du véhicule,
**caractérisé en ce que**
les pièces de toit (2 et 3) sont divisées en deux dans la position de fermeture, le long d'un axe de séparation longitudinal (5), lequel se trouve dans un plan avec l'axe longitudinal du véhicule, et dans la position cabriolet, elles peuvent être rangées l'une derrière l'autre dans l'espace de rangement (18) transversalement par rapport à l'axe longitudinal du véhicule, au moyen d'une cinématique d'ajustage qui leur est associée.

2. Toit de véhicule amovible rigide selon la revendication 1,
**caractérisé en ce que**
dans la position de fermeture, chaque pièce de véhicule (2 respectivement 3) s'étend sur tout l'espace intérieur du véhicule dans la direction longitudinale du véhicule.

3. Toit de véhicule amovible rigide selon la revendication 1 ou 2,
**caractérisé en ce**
**qu'**une vitre arrière (4) est prévue, qui est enveloppée dans la position de fermeture par les pièces de toit (2 et 3) et qui est reçue de façon détachable dans une cavité (9) dans les pièces de toit (2 et 3).

4. Toit de véhicule amovible rigide selon la revendication 3,
**caractérisé en ce que**
chaque pièce de toit (2 respectivement 3) enveloppe la vitre arrière (4) dans la position de fermeture du toit de véhicule (1) au niveau de son bord latéral et en partie au niveau de son bord supérieur.

5. Toit de véhicule amovible rigide selon la revendication 4,
**caractérisé en ce**
**qu'**une section recouvrant la vitre latérale (4) au niveau de son bord latéral forme un montant de custode (8) dans la pièce de toit (2 respectivement 3).

6. Toit de véhicule amovible rigide selon Tune quelconque des revendications 3 à 5,
**caractérisé en ce que**
les pièces de toit (2 et 3) sont rangées dans l'espace de rangement (18) dans la position cabriolet, de telle façon que la cavité pour la vitre arrière (9) recouvre un arceau de roue (17) du véhicule faisant saillie dans l'espace de rangement (18).

7. Toit de véhicule amovible rigide selon l'une quelconque des revendications 1 à 6,
**caractérisé en ce que**
la vitre arrière (4) présente une cinématique propre de vitre arrière qui est formée indépendamment des pièces de toit (2 et 3), respectivement d'une cinématique d'ajustage de pièces de toit, et qui est directement couplée à la carrosserie du véhicule.

8. Toit de véhicule amovible rigide selon l'une quelconque des revendications 1 à 7,
**caractérisé en ce que**
la vitre arrière (4) forme un coupe-vent dans la position cabriolet.

9. Toit de véhicule amovible rigide selon la revendication 8,
**caractérisé en ce que**
la vitre arrière (4) est ajustable pour le transfert des pièces de toit (2 et 3) entre une position de fermeture et une position cabriolet dans une position escamotée.
